Europäisches Patentamt

European Patent Office

Office européen des brevets

(19)

(11) Numéro de publication: **0 215 693
B1**

(12) **FASCICULE DE BREVET EUROPEEN**

(45) Date de publication du fascicule du brevet: 09.05.90

(51) Int. Cl.⁵: **B 60 R 22/06, F 16 D 11/00**

(21) Numéro de dépôt: **86401737.1**

(22) Date de dépôt: **01.08.86**

(54) **Dispositif de débrayage et de sécurité électrique pour ceinture de sécurité passive de véhicule automobile.**

(30) Priorité: **27.08.85 FR 8512768**

(43) Date de publication de la demande:
**25.03.87 Bulletin 87/13**

(45) Mention de la délivrance du brevet:
**09.05.90 Bulletin 90/19**

(84) Etats contractants désignés:
**DE GB IT SE**

(56) Documents cités:
**DE-A-2 615 511
DE-A-3 007 739
DE-C- 722 969
FR-A-2 502 808
US-A-3 053 362
US-A-3 882 955**

(73) Titulaire: **ECIA - EQUIPEMENTS ET COMPOSANTS POUR L'INDUSTRIE AUTOMOBILE
F-25400 Audincourt (Doubs) (FR)**

(72) Inventeur: **Betencourt, Joseph Julien
Autechaux Roide
F-25150 Pont-de-Roide (FR)**

(74) Mandataire: **Moncheny, Michel et al
c/o Cabinet Lavoix 2 Place d'Estienne d'Orves
F-75441 Paris Cedex 09 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention est relative aux ceintures passives de véhicule automobile et se rapporte plus particulièrement à un dispositif de débrayage et de sécurité électrique pour ceintures de sécurité de ce type.

Les ceintures de sécurité passives comportent généralement une sangle formant baudrier, dont l'extrémité supérieure est fixée à un organe mobile déplaçable dans un rail de guidage entre une position de libération et une position d'assujettissement de l'utilisateur sur son siège par un ruban d'entraînement passant sur un organe d'entraînement actionné par un moteur électrique.

L'organe d'entraînement est généralement relié à l'arbre de sortie du moteur électrique par un réducteur.

En cas de panne du moteur électrique et en raison des grands rapports de réduction entre l'arbre d'induit du moteur et l'organe d'entraînement, il est impossible de déplacer l'organe mobile à la main soit pour l'amener de la position de libération dans la position d'assujettissement soit pour le faire passer de la position d'assujettissement à la position de libération.

Si l'organe mobile est bloqué en position d'assujettissement, il est prévu une désolidarisation de la sangle qui est généralement fixée à l'organe mobile par une boucle.

Si l'organe mobile est bloqué en position de libération, il faut pouvoir le ramener à la main en position d'assujettissement pour pouvoir attacher la ceinture.

Il est donc nécessaire de rompre la chaîne cinématique entre le moteur électrique et l'organe d'entraînement pour rendre fou l'organe d'entraînement actionné par le moteur électrique.

On connaît d'après DE—A—3 007 739, un dispositif de sécurite passif pour automobile comprenant une courroie perforée d'entraînement d'un organe mobile auquel est fixée une extrémité d'une sangle d'une ceinture passive.

La courroie perforée est entraînée par une roue dentée coopérant avec une roue dentée couplée à un moteur électrique.

La roue dentée d'entraînement de la courroie est montée à rotation sur un leviert monté oscillant autour de l'une de ses extrémités et déplaçable angulairement par un dispositif de déplacement pour assurer le débrayage de la roue dentée d'entraînement par rapport à la roue dentée liée au moteur électrique.

Une panne électrique peut survenir sous la forme d'un court-circuit dans le moteur électrique ou bien sous la forme du maintien de l'alimentation du moteur.

Il est donc également intéressant de couper en même temps le circuit d'alimentation du moteur.

L'invention vise à créer un dispositif de débrayage et de sécurité électrique qui soit capable d'assurer l'ensemble des fonctions précitées.

Elle a donc pour objet un dispositif de débrayage pour ceinture de sécurité passive de véhicule automobile comportant un organe d'entraînement d'une bande d'entraînement d'un organe mobile entre une position de libération et une position d'assujettissement de l'utilisateur sur son siège et auquel est fixée une extrémité d'une sangle de ladite ceinture passive, ledit organe d'entraînement étant lié à un arbre d'entraînement déplaçable en rotation par un moteur électrique, des moyens de solidarisation en rotation de l'organe d'entraînement avec l'arbre d'entraînement et des moyens de maintien desdits moyens de solidarisation en position embrayée de l'arbre d'entraînement et de l'organe d'entraînement et de libération en rotation de l'organe d'entraînement par rapport à l'arbre d'entraînement, caractérisé en ce que lesdits moyens de solidarisation en rotation de l'organe d'entraînement avec l'arbre d'entraînement comportent une pièce cruciforme destinée à être engagée dans une encoche ménagée à l'extrémité correspondante de l'arbre d'entraînement par actionnement d'un bouton de manoeuvre en contact avec la pièce cruciforme, des branches latérales de la pièce cruciforme venant en prise avec des encoches diamétrales de l'organe d'entraînement.

L'invention sera mieux comprise à l'aide de la description qui va suivre, donnée uniquement à titre d'exemple et faite en se référant aux dessins annexés, sur lesquels:

—la Fig. 1 est une vue en élavation et en arrachement partiel d'un dispositif d'actionnement d'une bande d'entraînement pour ceinture de sécurité passive équipée d'un dispositif de débrayage et de sécurité électrique suivant l'invention;

—la Fig. 2 est une vue partielle en coupe montrant le dispositif de débrayage en position débrayée;

—la Fig. 3 est une vue partielle en perspective de l'arbre de sortie du dispositif d'entraînement montrant un détail de construction de cet arbre;

—la Fig. 4 est une vue de face de la roue à picots entrant dans la construction du dispositif de débrayage suivant l'invention;

—la Fig. 5 est une vue en perspective éclatée du bouton de manoeuvre du dispositif de débrayage et de sécurité électrique suivant l'invention;

—la Fig. 6 est un schéma montrant la position relative du bouton de manoeuvre de la Fig. 5 et des contacts électriques de l'interrupteur entrant dans la construction du dispositif de débrayage et de sécurité électrique suivant l'invention, lorsque ce dispositif est en position embrayée; et

—la Fig. 7 est une vue analogue à celle de la Fig. 6, le dispositif suivant l'invention étant en position débrayée.

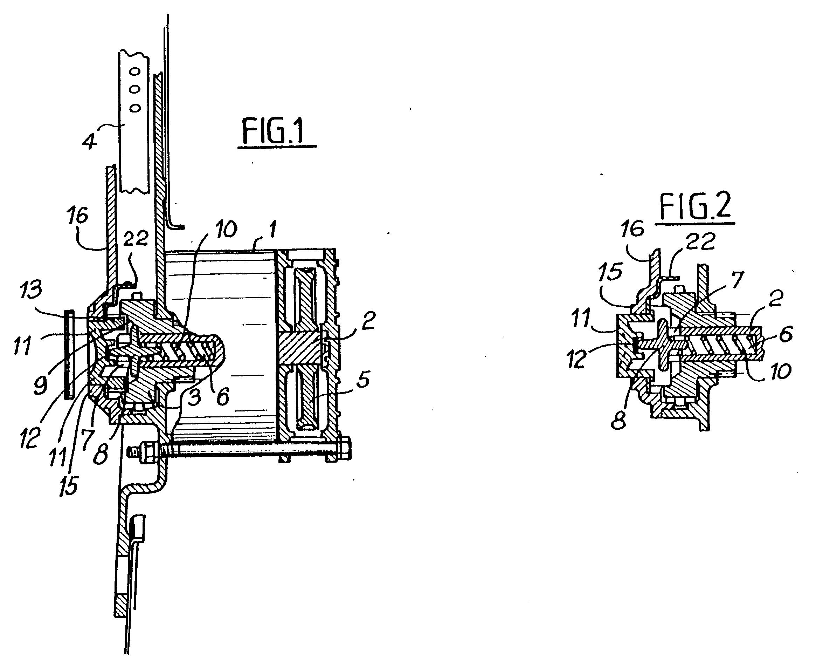

Le dispositif représenté à la Fig. 1 comporte un boîtier 1 dans lequel est monté à rotation un arbre 2 d'entraînement d'un organe d'entraînement 3 constitué par une roue à picots sur laquelle passe un ruban d'entraînement 4 d'un organe mobile auquel est fixée une extrémité d'une sangle d'une ceinture de sécurité passive non représentée.

L'arbre d'entraînement 1 porte à son extrémité oppoosée à la roue à picots 3, une roue dentée 5 destinée à être entraînée par un moteur électrique, par exemple par l'intermédiaire d'une vis sans fin non représentée.

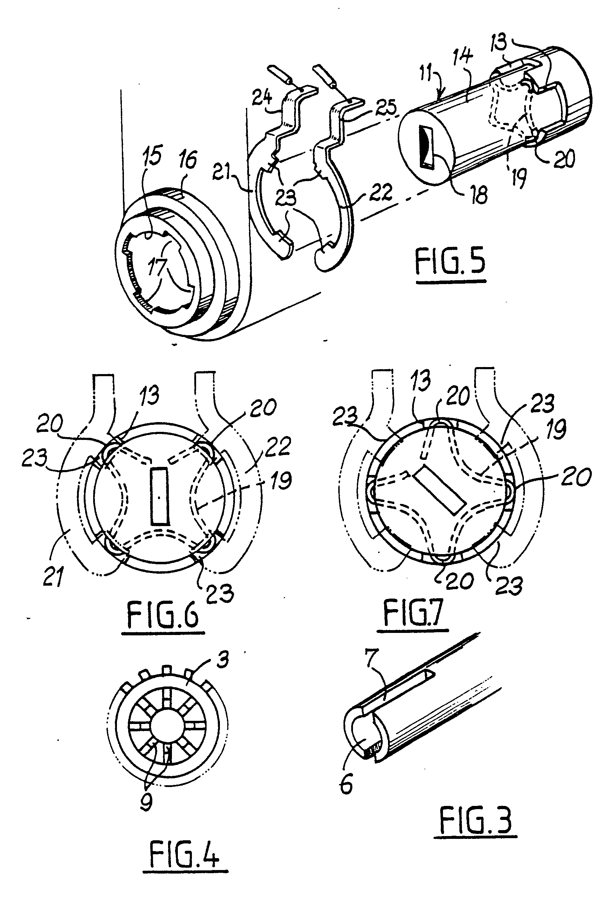

A son extrémité portant la roue à picots 3, l'arbre d'entraînement 2 comporte un alésage 6 pourvu d'une fente 7 (Fig. 3) avec laquelle coopère une pièce cruciforme 8 engagée dans des encoches diamétrales 9 de la roue à picots 3 (Fig. 4).

Dans l'alésage 6 de l'arbre 2 est logé un ressort 10 tendant à repousser axialement la pièce cruciforme 8 hors de l'encoche 7 de l'arbre 2. Le dispositif suivant l'invention comporte en outre un bouton de manoeuvre 11 destiné à maintenir la pièce cruciforme 8 dans l'encoche 7 de l'arbre 2 à l'encontre de l'action du ressort 10. Ce bouton de manoeuvre 11 comporte dans sa partie centrale en regard de l'une des branches de la pièce cruciforme, une pastille métallique 12, par exemple en acier trempé destinée à permettre la rotation du bouton 11 autour de l'extrémité de la branche correspondante de la pièce cruciforme 8.

Dans le présent mode de réalisation, le bouton de manoeuvre 11 comporte à son extrémité tournée vers la pièce cruciforme 8, quatre saillies 13 ménagées dans sa surface latérale et régulièrement réparties à sa périphérie. Ces saillies sont en relief par rapport à sa surface latérale principale 14. Le bouton de manoeuvre 11 est engagé dans l'alésage 15 d'un couvercle de fermeture 16. Cet alésage dans lequel ledit bouton de manoeuvre 11 est logé par sa surface latérale principale 14, avec un jeu fonctionnel, comporte autant d'encoches 7 que la bouton comporte de saillies 13. A son extrémité opposée à la roue à picots 3, le bouton de manoeuvre 11 comporte une fente 18 destinée à permettre de faire tourner le bouton 11 à l'aide d'un tournevis ou d'une pièce de monnaie.

Dans le bouton de manoeuvre 11 est surmoulée une pièce métallique 19 conductrice de l'électricité, constituée par exemple par un fil plié en étoile à quatre branches, les pointes desdites branches dépassant de la surface latérale principale 14 du bouton au droit des saillies 13 sans toutefois dépasser le diamètre extérieur du bouton au niveau de ces saillies. Les pointes de branches de la pièce 19 constituent les premiers contacts 20 d'un interrupteur électrique formant les moyens de sécurité électrique du dispositif suivant l'invention.

Dans le couvercle de fermeture 16, sont disposées des lamelles conductrices 21, 22 entourant la surface latérale principale 14 du bouchon de manoeuvre 11 et présentant chacune deux pattes radiales 23 disposées angulairement dans des positions équidistantes des encoches 17 du couvercle 16. Les lamelles 21, 22 comportent en outre des extrémités recourbées 24, 25 formant bornes de contact auxquelles sont connectés les conducteurs d'alimentation du moteur électrique du dispositif d'entraînement non représenté.

Les lamelles 21, 22 forment ensembles les seconds contacts de l'interrupteur précité.

Le bouton 11 est protégé par un capuchon anti-poussière 26.

Le fonctionnement du dispositif qui vient d'être décrit est le suivant.

Sur la Fig. 1, le dispositif est représenté en position embrayée. On voit en effet que le bouton de manoeuvre 11 est disposé avec ses saillies 13 engagées contre les parties pleines du rebord de l'alésage 15 du couvercle de fermeture 16. Dans cette position, le bouton 11 maintient la pièce cruciforme 8 dans la fente 7 de l'arbre d'entraînement 2 à l'encontre de l'action du ressort 10. Les branches latérales de la pièce cruciforme 8 sont engagées dans les encoches radiales 9 de la roue à picots 3 et assurent ainsi le calage en rotation de la roue à picots sur l'arbre d'entraînement 2.

Dans cette position, ainsi qu'on peut le voir à la Fig. 6, les contacts 20 affleurant les extrémités des saillies 13 sont en contact électrique avec les pattes radiales 23 des lamelles 21 et 22. Par conséquent, l'interrupteur formé par ces lamelles et lesdites contacts 20 est fermé, de sorte que le circuit d'alimentation du moteur électrique du dispositif d'entraînement dans lequel est branché cet interrupteur est lui aussi fermé.

Pour débrayer le dispositif, lors d'une panne du moteur électrique d'entraînement, on fait tourner le bouton de manoeuvre 11 à l'aide d'un tournevis ou d'une pièce de monnaie engagée dans la fente 18 dudit bouton pour l'amener dans la position représentée à la Fig. 2. A cet effet, on amène les saillies 13 du bouton 11 en regard des encoches 17 du couvercle de fermeture 16. Le bouchon est alors repoussé vers l'extérieur par le ressort de rappel 10 jusqu'à ce que les crans délimités entre les saillies 13 viennent en conctact avec le bord de l'alésage 15 dudit couvercle. Le ressort 10 repousse également la pièce cruciforme 8 hors de la fente 7 de l'arbre d'entraînement 2. Les branches latérales de la pièce cruciforme 8 sont alors dégagées des encoches radiales 9 de la roue à picots, ce qui assure la libération de cette roue par rapport à l'arbre d'entraînement 2.

La roue à picots 9 étant alors folle sur l'arbre 2, il est possible de manoeuvrer librement l'organe mobile portant la sangle de la ceinture passive et relié à la roue à picots par le ruban d'entraînement perforé 4.

Cette manoeuvre de débrayage provoque également la manoeuvre de l'interrupteur constituée par les contacts 20 solidaires du bouton de manoeuvre et les lamelles 21 et 22. En effet, la rotation du bouton 11 dans le sens du débrayage provoque l'interruption de la connexion entre les contacts 20 précités et les pattes-radiales 23 des lamelles 21 et 22, de sorte que l'interrupteur constitué par ces divers organes est alors ouvert comme le montre la Fig. 7.

On voit donc que l'actionnement du bouton de manoeuvre dans le sens du débrayage provoque simultanément la coupure de l'alimentation du moteur électrique du dispositif d'entraînement, ce qui constitue une sécurité électrique pour l'ensemble du dispositif.

Lorsqu'on souhaite placer de nouveau le dispositif en position embrayée, on fait tourner le bouton de manoeuvre 11 en sens inverse en accompagnant cette rotation d'une poussée axiale pour provoquer l'enfoncement des saillies 13 du bouton au-delà du couvercle de fermeture 16 tout en aidant par action sur l'organe mobile lié au ruban 4, les encoches radiales 9 de la roue à picots 3 à tomber devant la pièce cruciforme 8. Cette opération est rendue d'autant plus aisée que la roue à picots 3 comporte un nombre plus important d'encoches radiales 9.

On voit que l'agencement qui vient d'être décrit assure simultanément le débrayage de la roue à picots en vue de la rendre folle pour permettre de manoeuvrer librement l'organe mobile lié à la sangle de la ceinture de sécurité passive et une coupure de l'alimentation du moteur électrique, ce qui évite à celui-ci de subir des échauffements excessifs dans le cas du maintien de son alimentation.

**Revendications**

1. Dispositif de débrayage pour ceinture de sécurité passive de véhicule automobile comportant un organe d'entraînement (3) d'un bande d'entraînement (4) d'un organe mobile entre une position de libération et une position d'assujettissement de l'utilisateur sur son siège et auquel est fixée une extrémité d'une sangle de ladite ceinture passive, ledit organe d'entraînement (3) étant lié à un arbre d'entraînement déplaçable en rotation par un moteur électrique, des moyens (6, 7, 8, 9, 11) de solidarisation en rotation de l'organe d'entraînement (3) avec l'arbre d'entraînement (2) et des moyens (10, 13, 15, 16) de maintien desdits moyens de solidarisation en position embrayée de l'arbre d'entraînement (2) et de l'organe d'entraînement (3) et de libération en rotation de l'organe d'entraînement (3) par rapport à l'arbre d'entraînement (2), caractérisé en ce que lesdits moyens de solidarisation en rotation de l'organe d'entraînement avec l'arbre d'entraînement (2) comportent une pièce cruciforme destinée à être engagée dans une encoche (7) ménagée à l'extrémité correspondante de l'arbre d'entraînement (2) par actionnement d'un bouton de manoeuvre (11) en contact avec la pièce cruciforme, des branches latérales de la pièce cruciforme venant en prise avec des encoches diamétrales (9) de l'organe d'entraînement (3).

2. Dispositif de débrayage suivant la revendication 1, caractérisé en ce que lesdits moyens de maintien et de libération sont constitués par des saillies (13) prévues sur la surface latérale du bouton de manoeuvre (11) monté dans un alésage (15) d'un couvercle de fermeture (16) du dispositif, des encoches (17) en nombre égal au nombre de saillies (13) dudit bouton étant ménagées dans ledit alésage (15) du couvercle de fermeture (16), la venue en contact desdites saillies avec le bord de l'alésage (15) du couvercle (16) hors des encoches (17) par rotation du bouton de manoeuvre (11) assurant le maintien de la pièce cruciforme (8) dans l'encoche (7) de l'arbre d'entraînement (2) et dans les encoches diamétrales (9) de l'organe d'entraînement (3) tandis que l'engagement des saillies (13) dans lesdites encoches (17) de l'alésage (15) par une nouvelle rotation du bouton (11) permet le retrait du bouton de manoeuvre et le dégagement de la pièce cruciforme (8) hors de l'encoche (7) de l'arbre d'entraînement (2) sous l'action d'un organe élastique de rappel (10) logé dans un alésage (6) dudit arbre.

3. Dispositif de débrayage suivant l'une quelconque des revendications 1 et 2, caractérisé en ce qu'il comporte en outre des moyens de sécurité électrique constitués par un interrupteur (20, 21, 22, 23) branché dans le circuit d'alimentation du moteur électrique d'actionnement du dispositif d'entraînement et actionné par la rotation du bouton de manoeuvre (11) par rapport au couvercle de fermeture du dispositif.

4. Dispositif de débrayage suivant la revendication 3, caractérisé en ce que ledit interrupteur comporte une pièce (19) conductrice de l'électricité solidaire du bouton de manoeuvre et définissant des contacts (20) qui affleurent les extrémités des saillies latérales (13) dudit bouton, lesdits contacts (20) coopérant avec des lamelles conductrices (21, 22) disposées dans le couvercle de fermeture (16) et pourvues de pattes radiales (23) disposées angulairement dans des positions équidistantes des encoches (17) du couvercle (16), lesdites lamelles (21, 22) étant chacune connectées à un conducteur du circuit d'alimentation du moteur électrique, la fermeture de l'interrupteur ainsi constitué étant assurée par la venue en contact des pattes radiales (23) des lamelles (21, 22) avec les contacts (20) de la pièce conductrice (19, cette position correspondant à la position embrayée du dispositif de débrayage, tandis que l'ouverture dudit interrupteur est assurée par l'interruption de la connexion entre les pattes radiales (23) et les contacts (20) lorsque ledit dispositif est débrayé.

**Patentansprüche**

1. Entkupplungsvorrichtung für einen passiven Fahrzeug-Sicherheitsgurt, mit einem Antriebselement (3) für ein Antriebsband (4) eines zwischen einer Freigabe- und Festhaltestellung für den Benutzer auf seinem Sitz beweglichen Elements, an welchem ein Ende eines Gurts des passiven Sicherheitsgurts befestigt ist, wobei das Antriebselement (3) mit einer durch einen Elektromotor drehbaren Antriebswelle verbunden ist, Mitteln (6, 7, 8, 9, 11) zur drehfesten Verbindung des Antriebselements (3) mit der Antriebswelle (2) und Mitteln (10, 13, 15, 16) zum Halten der Verbindungsmittel in eingekuppelter Stellung von Antriebswelle (2) und Antriebselement (3) und zur Drehfreigabe von Antriebselement (3) bezüglich der Antriebswelle (2), dadurch gekennzeichnet, daß die Mittel zur drehfesten Verbindung des Antriebselements mit der Antriebswelle (2) in kreuzförmiges Teil umfassen, welches für ein Einführen in einen im zugehörigen Ende der Antriebswelle (2) ausgebildeten Einschnitt (7) durch Betätigen eines mit dem kreuzförmigen Teil in Berührung stehenden Bedienungsknopfes (11) bestimmt ist, wobei seitliche Zweige des kreuzförmigen Teils in Eingriff mit diametralen Einschnitten (9) des Antriebselements (3) kommen.

2. Entkupplungsvorrichtung nach Anspruch 1, dadurch gekennzeichnet, daß die Halte- und Freigabemittel durch Vorsprünge (13) gebildet sind, welche auf der seitlichen Oberfläche des in einer Bohrung (15) eines Verschlußdeckels (16) der Vorrichtung angebrachten Bedienungsknopfes (11) vorgesehen sind, wobei Einschnitte (17) in einer zur Anzahl der Vorsprünge (13) des Knopfes gleichen Anzahl in der Bohrung (15) des Verschlußdeckels (16) ausgebildet sind, wobei das In-Berührung-Kommen der Vorsprünge mit dem Rand der Bohrung (15) des Deckels (16) außerhalb der Einschnitte (17) durch Drehen des Bedienungsknopfes (11) gewährleistet, daß das kreuzförmige Teil (8) im Einschnitt (7) der Antriebswelle (2) und den diametralen Einschnitten (9) des Antriebselements (3) gehalten wird, während das Einführen der Vorsprünge (13) in die Einschnitte (17) der Bohrung (15) durch eine erneute Drehung des Knopfes (11) das Zurückziehen des Bedienungsknopfes und das Lösen des kreuzförmigen Teils (8) aus dem Einschnitt (7) der Antriebswelle (2) heraus unter der Wirkung eines elastischen Rückholelements (10), welches in einer Bohrung (6) der Welle aufgenommen ist, gestattet.

3. Entkupplungsvorrichtung nach irgendeinem der Ansprüche 1 und 2, dadurch gekennzeichnet, daß sie ferner elektrische Sicherheitsmittel umfaßt, welche durch einen in den Speisekreis des elektrischen Betätigungsmotors für die Antriebsvorrichtung gelegten und durch Drehung des Bedienungsknopfes (11) in Bezug auf den Verschlußdeckel der Vorrichtung betätigten Schalter (20, 21, 22, 23) gebildet ist.

4. Entkupplungsvorrichtung nach Anspruch 3, dadurch gekennzeichnet, daß der Schalter ein elektrisch leitendes Teil (19) umfaßt, welches mit dem Bedienungsknopf fest verbunden ist und Kontakte definiert (20), welche mit den Enden der seitlichen Vorsprünge (13) des Knopfes bündig sind, wobei die Kontakte (20) mit leitfähigen Lamellen (21, 22) zusammenwirken, die in dem Verschlußdeckel (16) angeordnet und mit radialen Lappen (23) versehen sind, die winkelmäßig in äquidistanten Lagen der Einschnitte (17) des Deckels (16) angeordnet sind, wobei die Lamellen (21, 22) jeweils mit einem Leiter des Speisekreises des Elektromotors verbunden sind, wobei das Schließen des so aufgebauten Schalters durch das In-Berührung-Kommen der radialen Lappen (23) der Lamellen (21, 22) mit den Kontakten (20) des leitfähigen Teils (19) bewirkt wird, wobei diese Lage der eingekuppelten Lage der Entkupplungsvorrichtung entspricht, während das Öffnen des Schalters durch die Unterbrechung der Verbindung zwischen den radialen Lappen (23) und den Kontakten (20) beim Entkuppeln der Vorrichtung bewirkt wird.

**Claims**

1. Disengaging device for a passive safety belt of a motor vehicle comprising a member (3) for driving a drive band (4) of a mobile member (3) between a release position and a position securing the user in his seat and to which is fixed one end of a strap of said passive belt, the drive member being connected to a drive shaft displaceable in rotation by an electric motor, means (6, 7, 8, 9, 11) for linking in rotation the drive member (3) and the drive shaft (2) and means (10, 13, 15, 16) for maintaining said linking means in the engaged position of the drive shaft (2) and the drive member (3) and for releasing in rotation the drive member (3) with respect to the drive shaft (2), characterized in that said means for linking in rotation the drive member (3) and the drive shaft (2) incorporate a cruciform part for engagement in a notch (7) made on the corresponding end of the drive shaft (2) by the actuation of an operating button (11) in contact with the cruciform part, lateral branches of the latter engaging with diametrical notches (9) of the drive member (3).

2. Disengaging device according to claim 1, characterized in that said maintaining and release means are constituted by projections (13) provided on the lateral surface of the operating button (11) mounted in a bore (15) of a closing cover (16) of the device, notches (17) in the same number as their projections (13) on said button being provided in said bore (15) of the closing cover (16), the contacting of said projections with the edge of the bore (15) of the cover (16) outside the notches (17) by the rotation of button (11) ensuring that the cruciform member (8) is maintained in notch (7) of drive shaft (2) and in the diametrical notches (9) of the drive member (3), whilst the engagement of projections (13) in said notches (17) of bore (15) by a further rotation of button (11) makes it possible to withdraw the said button and to disengage the cruciform part (8) from the notch (7) of drive shaft (2) under the action of an elastic return member (10) located in a bore (6) of said shaft.

3. Disengaging device according to either of the claims 1 or 2, characterized in that it also has electrical safety means constituted by a switch (20, 21, 22, 23) connected into the supply circuit of the electric motor for operating the drive device and actuated by the rotation of the operating button (11) with respect to the closing cover of the device.

4. Disengaging device according to claim 3, characterised in that the said switch has an electricity conducting part (19) integral with the manipulating button and defining contacts (20) flush with the ends of the lateral projection (13) of said button, said contact (20) cooperating with the conductive plates (21, 22) located in the closing cover (16) and provided with radial tabs (23) angularly arranged in equidistant positions of the notches (17) of cover (16), each of said plates (21, 22) being connected to a conductor of the supply circuit of the electric motor, the closing of the thus formed switch being ensured by the engaging of the radial tabs (23) of plates (21, 22) with the contacts (20) of the conductive part (19), said position corresponding to the engaged position of the disengaging device, whereas the opening of said switch is ensured by the interruption of the connection between the radial tabs (23) and the contacts (20) when said device is disengaged.

FIG.2

FIG.1

FIG.5

FIG.6

FIG.7

FIG.4

FIG.3